# EUROPEAN PATENT SPECIFICATION

(11) **EP 3 062 210 B1**
(45) Date of publication and mention of the grant of the patent: **06.11.2019**
(21) Application number: 15382073.3
(22) Date of filing: 24.02.2015
(51) Int. Cl.: G06F 3/06, H04L 29/06, G06F 16/00, G06F 12/0871, G06F 12/0888

(54) **Method and server for the storage of multimedia content and its delivery in adaptive streaming systems**
VERFAHREN UND SERVER ZUR SPEICHERUNG VON MULTIMEDIA-INHALTEN UND DEREN BEREITSTELLUNG IN ADAPTIVEN STREAMING-SYSTEMEN
PROCÉDÉ ET SERVEUR POUR LE STOCKAGE DE CONTENU MULTIMÉDIA ET SA DISTRIBUTION DANS DES SYSTÈMES DE STREAMING ADAPTATIFS

(43) Date of publication of application: 31.08.2016
(73) Proprietor: Alcatel-Lucent España, S.A., 28050 Madrid (ES)
(72) Inventor: Ruiz Alonso, Jaime, 28050 Madrid (ES); Perez Garcia, Pablo, 28050 Madrid (ES); Villegas Nuñez, Alvaro, 28050 Madrid (ES)
(74) Representative: Carpintero Lopez, Francisco

(56) References cited:
- US-A1- 2011 153 931
- US-A1- 2014 208 017
- US-A1- 2015 006 788
- US-A1- 2015 033 057
- THOMAS STOCKHAMMER: "On DASH and MMT", 99. MPEG MEETING; 6-2-2012 - 10-2-2012; SAN JOSÉ; (MOTION PICTURE EXPERT GROUP OR ISO/IEC JTC1/SC29/WG11),, no. m23888, 6 February 2012 (2012-02-06), XP030052413,

## Description

### BACKGROUND OF THE INVENTION

### Technical field

The present invention relates to the storage and delivery of multimedia contents (e.g., text, audio, video, software, etc., and any combination of them) which use an adaptive streaming format in communications networks. More particularly, present invention relates to asymmetric disk storage for adaptive streaming delivery optimization.

### Description of related art

HTTP (Hypertext Transfer Protocol) is the common protocol for the delivery or adaptive delivery of live events and channels online to consumer devices. HTTP adaptive streaming (HAS) is the generic term for various methods of adaptive bit-rate streaming over HTTP, commonly used for delivering live and on-demand multimedia over IP networks. Service providers and network operators deploy HAS as a feature of content delivery networks (CDNs) to provide uninterrupted QoE for the subscribers in networks with fluctuating bandwidth, and to reach broad population of retail connected devices that support HAS 'off the shelf'. HAS is the new paradigm for the delivery of video to all kind of screens through managed or un-managed networks.

Protocols based on HTTP adaptive streaming, e.g., HTTP Live Streaming (HLS), Smooth Streaming, HTTP Dynamic Streaming (HDS), Dynamic Adaptive Streaming over HTTP (DASH), etc., encode content in different bitrates and split it in relatively small segments (a few seconds long each), aligned. End devices request each segment through an independent HTTP GET, so that they can easily switch the bitrate at any segment boundary, simply selecting the Uniform Resource Locator (URL) of a segment with a different quality in the next segment period. The list of available segments is described by a manifest, usually a small text file.

Servers which store and deliver HAS assets (segments and manifests) work as regular HTTP servers but with strong video requirements: objects need to be retrieved from the server storage and be delivered to the HTTP egress in less time than the playout time that the segment will produce. As any video server developer knows, this is not a trivial task to be done at scale.

One of the challenges for making these servers scale is the performance of local disks, because the objects to be delivered have very different sizes: while manifests, low bitrate objects and audio-only segments may be a few KB files, higher bitrate video segments may be several MB large. When implemented on spinning disks, all files consume input/output operations (lOPs) independently of their size due to the head positioning process; a state of the art spinning disk offers at most a few hundreds of lOPs per second. Once the head is positioned, the throughput may be large. As a result, the throughput of large files is much higher than what can be obtained for small files. In a HAS environment with that mixture of large and small objects in the same server, the resulting combined throughput is severely reduced.

Possible existing solutions for improving the performance of local disks are:
- Solid state disks (SSD): this technology does not need to physically position heads or rotate disks, and in fact they provide a very good performance for small objects: 15.000 write operations per second and 40.000 read operations per second (ops/sec) are realistic values with state of the art SSD disks, while the best spinning disk hardly reaches 500 ops/sec.

However, the density and, above all, their current price (3-4 times higher) make SSD disks prohibitive for a massive HAS video storage.
- The combination of several small objects to produce big files in disk: the small objects are generated on the fly by the HTTP server at the output from the large objects in disk. The problem with this approach is that it introduces a high complexity in the application, which needs to be aware of this small to large file composition. It also consumes more memory and CPU power than a straight HTTP delivery, and the latency is also increased.

US2015/033057A1 discloses a power conservation mechanism based on caching, which employs a large cache and aggressive caching algorithm to serve data from the storage media (hard disk or SSD) or write data to the storage media. The cache provides an efficient location from which to serve data, especially multi-media. The mechanism determines when to place the drive into a lower power state, such as idle, or standby, based on the amount of anticipated idle time provided by the large cache.

US2011/153931A1 discloses a storage subsystem combining solid state drive (SSD) and hard disk drive (HDD) technologies to provide low access latency and low complexity. Separate free lists are maintained for the SSD and the HDD and blocks of file system data are stored uniquely on either the SSD or the HDD. When a read access is made to the subsystem, if the data is present on the SSD, the data is returned, but if the block is present on the HDD, it is migrated to the SSD and the block on the HDD is returned to the HDD free list. On a write access, if the block is present in the either the SSD or HDD, the block is overwritten, but if the block is not present in the subsystem, the block is written to the HDD.

US2014/208017A1 discloses a thinly provisioned flash cache with shared storage pool in a computing storage environment, the computing storage environment incorporating at least high-speed and lower-speed caches, and managed tiered levels of storage. A Solid State Device (SSD) tier is variably shared between the lower-speed cache and the managed tiered levels of storage such that the managed tiered levels of storage are operational on large data segments, and the lower-speed cache is allocated with the large data segments, yet operates with data segments of a smaller size than the large data segments and within the large data segments.

US2015/006788A1 discloses techniques for utilizing flash storage as an extension of hard disk (HDD) based storage. A computer system can store a first subset of blocks of a logical file in a first physical file residing on a flash storage tier, and a second subset of blocks of the logical file in a second physical file residing on an HDD storage tier. The computer system can then receive an I/O request directed to one or more blocks of the logical file and process the I/O request by accessing the flash storage tier or the HDD storage tier, the accessing being based on whether the one or more blocks are part of the first subset of blocks stored in the first physical file.

The paper "On DASH and MMT" by THOMAS STOCKHAMMER (99. MPEG MEETING; 6-2-2012 - 10-2-2012; SAN JOSE; MOTION PICTURE EXPERT GROUP OR ISO/IEC JTC1/SC29/WG11, no. m23888, 6 February 2012), describes the formats and use cases of the Dynamic Adaptive Streaming over HTTP (DASH) technology, and how DASH maps to the MPEG media transport (MMT) requirements.

Therefore, there is a need of optimising the performance of storage means (the performance per price unit invested in storage) when the content to be stored is from HTTP adaptive streaming, composed of objects of very different sizes which reside in massive storage systems (e.g., hard disks) and need to be delivered in real time with very tight timing constraints.

### SUMMARY

In light of the present need for providing a method and system for providing massive storage (disks) in HAS environments which overcomes the aforementioned drawbacks, the present invention combines the use of solid state disks (SSD) and spinning disks to allow optimization of the Adaptive Streaming content delivery by splitting the allocation of content into the two available storage means (SSD and spinning disks).

The present invention allocates the HAS content to the combined solid state and spinning disks storage in a transparent way, i.e. without involving any change in the HAS delivery application. This split allocation is done transparently based on the size of the content: small objects are stored in SSD disks in order to get a more efficient access to the stored objects, as they are small and, hence, the total amount is still small and the price impact is low; while large objects are stored in spinning disks.

The present invention is defined in the appended independent claims to which reference should be made. Advantageous features are set out in the appended dependent claims. The embodiments or examples of the following description which are not covered by the appended claims are considered as not being part of the invention.

In an embodiment of the invention, the split allocation is performed by an ingress application, which is an ingestion module receiving digital media content from network components, such as a Content Management System (CMS) or a live HeadEnd, which control, process and deliver HAS and/or live stream to any CDN (content delivery network), OTT (over-the-top content) or IPTV platforms. The ingress application knows the size of the content objects to be stored, and decides where to store it: either in the SSD disks if size is small or in the spinning disks if size is large.

In addition, the present invention provides an egress module, implemented as the HTTP front end, with a signaling mechanism to allow the ease localization of the objects in the disks where they are stored.

Both the ingress and the egress applications do not need to be aware of the standard filesystem structure offered to the delivery application.

Some simplifications and omissions may be made in the present summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections.

According to an aspect of the invention a method is provided for storing multimedia content to be delivered in HTTP adaptive streaming, wherein files of multimedia content to be stored are written through a single storage API and read by the single storage API for their delivery by an adaptive streaming delivery application which is at the application layer over said API. The method comprises the following steps:
- receiving multimedia content and converting the received multimedia content into files of multimedia content of a determined size,
- sending a command to the single storage API for writing the files into one of two filesystems depending on the determined size of the file:
   i) either into a first filesystem implemented in solid state disks,
ii) or into a second filesystem implemented in spinning disks; wherein both the first and second filesystems, which the delivery application layer is unaware of, communicate with the common storage API.

According to another aspect of the invention a (streaming) delivery server is provided, comprising means for implementing the method described before. The proposed delivery server is a HTTP adaptive streaming server.

According to a last aspect of the invention, a computer program product is provided, comprising computer-executable instructions for performing any of the steps of the method previously disclosed, when the program is run on a computer and a digital data storage medium is also provided encoding a machine-executable program of instructions to perform any of the steps of the method previously disclosed.

These and other aspects of the invention will be apparent from and elucidated with reference to the embodiments described hereinafter.

The presented embodiments potentially have the following advantages when compared with the prior art:
- The proposed solution provides double performance with respect to a spinning disk solution and it halves the price of an equivalent SSD-only solution.
- The proposed solution improves the storage performance without impacting the application level as it does not require complex and protocol-dependant modifications in the delivery application.

### BRIEF DESCRIPTION OF THE DRAWINGS

Some embodiments of the method, system and device in accordance with embodiments of the present invention are now described, by way of example only, and with reference to the accompanying drawings, in which:

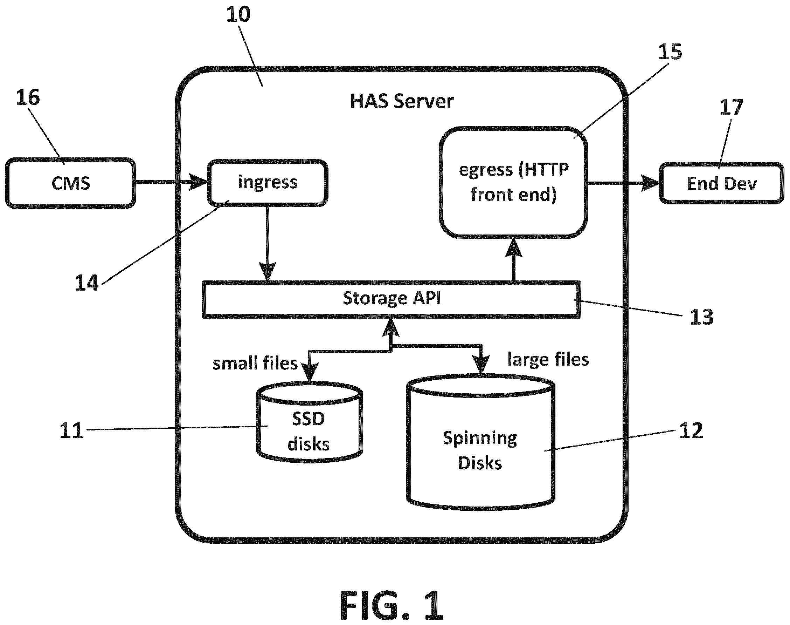

Figure 1 shows a block diagram of system architecture for content storing and delivering through adaptive streaming, according to a preferred embodiment of the present invention.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

Figure 1 shows an example of a proposed embodiment based on the existing architecture of a HAS-enabled origin server. A streaming server (10) comprising massive storage means is proposed, wherein two different filesystems, a first filesystem (11) implemented in solid state disks and a second filesystem (12) implemented in spinning disks, are configured as described below. In addition, the streaming server (10) offers a standard storage API (13), e.g., a Portable Operating System Interface (Posix) to a delivery application which delivers media objects through a HAS protocol to an end-user device (17). As opposed to a set of fully equivalent storage devices, the API (13) is offering a standard filesystem for handling different kind of sets of storage devices, each set comprising storage devices that share similar properties.

The streaming server (10) comprises an ingress module (14) and an egress module (14), both using the same API (13) for write and read operations respectively.

The streaming server (10) can be configured for storing and delivering multimedia content in HTTP adaptive streaming from an origin node (16) to an end-user device (17) of the content consumer.

On file creation, the API (13) detects through the ingress module (14) the length of the file received from the origin node (16) of the communication network, e.g. a CMS, managing multimedia content to be delivered to the consumer. In some cases the detection of the file length can be done upfront by the ingress module (14) based on properties of the flow, e.g. all manifests and all audio-only segments may usually be considered "small". In a more generic way, the ingress module (14) determines whether the size of the content is large or small by comparing the length of the file to be written with a pre-configured size threshold, for instance, trough the following steps:
- storing data in a buffer in memory until it reaches a threshold in size;
- if the size threshold of buffered data is reached (i.e., the file is considered to be large), writing the file in the slow&big storage, i.e., in spinning disks, (and further data is appended directly there);
- if not, the file is considered to be small and is written into the fast&small storage, i.e., in solid state disks.

Depending on the determined size, the ingress module (14) sends a command to the API (13) for storing the received file either into a SSD disk of the first filesystem (11) or into a spinning disk of the second filesystem (12).

The first filesystem (11) and the second filesystem (12) are configured as follows:
- Directories in the first filesystem (11) are the ones which indicate the full list of files available in the SSD disks;
- The metadata of files in these directories indicate when a file is actually present in a spinning disk of the second filesystem (12).

The directories in the first filesystem (11) contain all information about all files in the storage means of both filesystems (11, 12). A single directory basically stores the metadata of all files, and that metadata indicates if the full file is present in this same filesystem or it is just a "link" to the real location of the file in the other filesystem.

The egress module (15) uses the same API (13) for its read functions. This standard storage layer always searches files in the fast&small storage means, i.e. SSD, of the first filesystem (11), where directories can be cached. Depending on their metadata, the egress module (15) retrieves the content of the files from the appropriate, first or second, filesystem (11, 12).

Both the ingress and the egress modules (14, 15) do not need to be aware of the standard filesystem structure offered by the API (13) to the delivery mechanism at the application layer.

A dimensioning example follows, case 3, for the configuration described above, and is compared with possible cases, case 1 and case 2, using prior art approaches:

### - Case 1 (spinning disks):

Massive storage consists of 30 spinning disks, each with 3TiB of storage and a maximum throughput of 300 IOP per second, 512KiB each. The total number of lOPs of 512KiB required to fully read each group of segments (one of each quality) will be 9, so 4,5 lOPs per second. The whole storage offers 30x300 = 9,000 IOPs/s, so the server can provide 2000 movies simultaneously. Price is P. Price per 1000 simultaneous movies is 0,5P.

### - Case 2 (SSD):

For the same amount of disks (assuming 3TiB SSD, possibly not realistic), same number of hours are spent. Each disk can provide up to 40,000 random read operations of 4KiB. With given HAS profiles, the number of consumed lOPs per segment would be 510, hence 255 lOPs per second. The whole storage offers 30x40,000 = 1,200,000 so the server can provide 4700 movies, twice as with spinning disk. The price, on the other hand, may be three times higher or even more (3P). Price per 1000 simultaneous movies is 0,63P.

### - Case 3 (combined SSD and spinning disk filesystem):

Store all objects smaller than a maximum size threshold, defined as 512KiB, in SSD disks. These objects consume 25% of the storage, but 67% of the lOPs of spinning disks. Therefore, if using 8 SSD disks + 22 spinning disk. the performance can be calculated as follows:
SSD part: objects there consume 63 lOPs per second, so
   8x40,000/63 = 5000 simultaneous movies.
Spinning part: 1,5 lOPs per second, so
   22x300/1,5 = 4400 movies.

Therefore, 4400 movies can be delivered simultaneously, similar to the pure SSD case 2, but at a lower price of 1,5P. Price per 1000 movies is 0,34P.

The following sample parameters were assumed in the three examplary cases:
- HTTP adaptive streaming protocol with 2 second segments and 8 bitrates spanning from 64kbps (for audio-only components) to 8 Mbps (for HD video). Aggregate bitrate is around 20Mbps.
- Storage for 10,000 hours of content. With given HAS profiles, this results in around 80TiB of total storage.
- For a 2-hours movie, the HAS asset is composed of around 30,000 objects with sizes from 16KiB to 16MiB.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention as defined by the appended claims and are included within the scope of the appended claims.

Furthermore, all examples recited herein are principally intended expressly to be only for pedagogical purposes to aid the reader in understanding the principles of the invention defined by the appended claims and the concepts contributed by the inventor(s) to furthering the art within the scope of the appended claims, and are to be construed as being without limitation to such specifically recited examples and conditions. Moreover, all statements herein reciting principles, aspects, and embodiments of the invention defined by the appended claims, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for storing multimedia content to be delivered in HTTP adaptive streaming, comprising:
- writing files of multimedia content to be stored and reading at least one requested file of multimedia content to be delivered through a single storage API (13) to an adaptive streaming delivery application layer which is over the single storage API (13), the method further comprising:
- receiving multimedia content and converting the received multimedia content into the files of multimedia content, each file having a determined size,
- sending a command to the single storage API (13) for writing the files into one filesystem selected from two filesystems (11, 12), a first filesystem (11) implemented in solid state disks and a second filesystem (12) implemented in spinning disks, the single storage API (13) being communicated with the two filesystems (11, 12), wherein the adaptive streaming delivery application layer is unaware of both the first filesystem (11) and second filesystem (12) and wherein the one filesystem is selected based on the determined size of each file by:
- comparing the determined size of each file to be written with a pre-configured size threshold,
- if the determined size of the file is equal or higher than the pre-configured size threshold, sending the command to the single storage API (13) for writing the file, the command indicating the second filesystem (12);and writing by the single storage API (13) the file in the spinning disks;
- otherwise, the command sent to the single storage API (13) for writing the file indicates the first filesystem (11) and the file is written by the single storage API (13) into the solid state disks;
- receiving a command for reading by the single storage API (13) the, at least one, requested file;
- searching the requested file in a directory of the first filesystem (11) for retrieving metadata of the requested file which indicate whether the requested file is written in the second filesystem (12) or not,
- reading the multimedia content of the requested file, depending on the retrieved metadata, from either the first filesystem (11) or the second filesystem (12).

2. A HTTP adaptive streaming server (10) for storing multimedia content from an origin node (16) and delivering multimedia content in HTTP adaptive streaming to an end-user device (17) requesting files of multimedia content, the streaming server (10) comprising:
- a single storage API (13) for writing files of multimedia content to be stored and reading the requested files of multimedia content to be delivered, the HTTP adaptive streaming server further comprising:
- a first filesystem (11) implemented in solid state disks and a second filesystem (12) implemented in spinning disks, both the first filesystem (11) and second filesystem (12) being communicated with the single storage API (13); wherein an adaptive streaming delivery application layer is over the single storage API (13) and unaware of both the first filesystem (11) and second filesystem (12), and the first filesystem (11) comprising directories which indicate a list of files available in the solid state disks; the directories comprising metadata of files which indicate whether a requested file is written in the second filesystem (12);
an ingress module (14) for receiving multimedia content from the origin node (16), converting the received multimedia content into files of multimedia content of a determined size and sending a command to the storage API (13) for writing the files, depending on the determined size, either into the first filesystem (11) or into the second filesystem (12);
- if the determined size of the file is equal or higher than a pre-configured size threshold, the ingress module (14) sends the command to the single storage API (13) for writing the file into the second filesystem (12);
- if the determined size of the file is lower than a pre-configured size threshold, the ingress module (14) sends the command to the single storage API (13) for writing the file into the first filesystem (11);
- an egress module (15) for receiving a command for reading by the single storage API (13) at least one of the requested files, searching the, at least one, requested file in the directories of the first filesystem (11), retrieving the metadata of the requested file which indicate whether the requested file is written in the second filesystem (12) or not and obtaining the multimedia content of the requested file, depending on the retrieved metadata, from either the first filesystem (11) or the second filesystem (12).

3. A computer program product comprising computer-executable instructions which, when the program is executed by a computer, cause the computer to carry out the method of claim 1.

4. A digital data storage medium encoding a machine-executable program of instructions which, when executed by a computer, cause the computer to carry out the method of claim 1.

## Patentansprüche

1. Verfahren zum Speichern eines Multimediainhalts für die Übermittlung in einem HTTP-adaptiven Streaming, umfassend:
- Schreiben von Dateien mit einem zu speichernden Multimediainhalt und Lesen wenigstens einer angefragten Datei mit einem zu übermittelnden Multimediainhalt über eine einzelne Speicher-API (13) zu einer adaptiven Streamingübermittlung-Anwendungsschicht, die über der einzelnen Speicher-API (13) liegt,
wobei das Verfahren weiterhin umfasst:
- Empfangen eines Multimediainhalts und Wandeln des empfangenen Multimediainhalts zu den Dateien mit einem Multimediainhalt, wobei jede Datei eine bestimmte Größe aufweist,
- Senden eines Befehls zu der einzelnen Speicher-API (13) für das Schreiben der Dateien in ein Dateisystem, das aus zwei Dateisystemen (11, 12) ausgewählt ist, wobei das erste Dateisystem (11) in Solid-State-Disks implementiert ist und das zweite Dateisystem (12) in Spinning-Disks implementiert ist, wobei die einzelne Speicher-API (13) mit den zwei Dateisystemen (11, 12) in Kommunikation steht, wobei die adaptive Streamingübermittlung-Anwendungsschicht keine Kenntnis von dem ersten Dateisystem (11) und dem zweiten Dateisystem (12) hat und wobei das eine Dateisystem basierend auf der bestimmten Größe jeder Datei ausgewählt wird durch:
- Vergleichen der bestimmten Größe jeder zu schreibenden Datei mit einem vorkonfigurierten Größenschwellwert,
- wenn die bestimmte Größe der Datei gleich oder größer als der vorbestimmte Größenschwellwert ist, Senden des Befehls an die einzelne Speicher-API (13) für das Schreiben der Datei, wobei der Befehl das zweite Dateisystem (12) angibt, und Schreiben der Datei durch die einzelne Speicher-API (13) in die Spinning-Disks,
- wobei ansonsten der zu der einzelnen Speicher-API (13) für das Schreiben der Datei gesendete Befehl das erste Dateisystem (11) angibt und die Datei durch die einzelne Speicher-API (13) in die Solid-State-Disks geschrieben wird,
- Empfangen eines Befehls für das Lesen der wenigstens einer angefragten Datei durch die einzelne Speicher-API (13),
- Suchen der angefragten Datei in einem Verzeichnis des ersten Dateisystems (11) für das Abrufen von Metadaten der angefragten Datei, die angeben, ob die angefragte Datei in dem zweiten Dateisystem (12) geschrieben ist oder nicht,
- Lesen des Multimediainhalts der angefragten Datei in Abhängigkeit von den abgerufenen Metadaten von entweder dem ersten Dateisystem (11) oder dem zweiten Dateisystem (12).

2. HTTP-adaptiver Streaming-Server (10) für das Speichern eines Multimediainhalts von einem Ursprungsknoten (16) und das Übermitteln eines Multimediainhalts in einem HTTP-adaptiven Streaming zu einem Endbenutzergerät (17), das Dateien mit einem Multimediainhalt anfragt, wobei der Streaming-Server (10) umfasst:
- eine einzelne Speicher-API (13) für das Schreiben von Dateien mit einem zu speichernden Multimediainhalt und das Lesen der angefragten Dateien mit einem zu übermittelnden Multimediainhalt,
wobei der HTTP-adaptive Streaming-Server weiterhin umfasst:
- ein erstes Dateisystem (11), das in Solid-State-Disks implementiert ist, und ein zweites Dateisystem (12), das in Spinning-Disks implementiert ist, wobei das erste Dateisystem (11) und das zweite Dateisystem (12) in einer Kommunikation mit der einzelnen Speicher-API (13) stehen, wobei eine adaptive Streamingübermittlung-Anwendungsschicht über der einzelnen Speicher-API (13) liegt und keine Kenntnis von dem ersten Dateisystem (11) und dem zweiten Dateisystem (12) hat, wobei das erste Dateisystem (11) Verzeichnisse umfasst, die eine Liste von in den Solid-State-Disks verfügbaren Dateien angeben, wobei die Verzeichnisse Metadaten von Dateien enthalten, die angeben, ob eine angefragte Datei in dem zweiten Dateisystem (12) geschrieben ist,
- ein Eintrittsmodul (14) zum Empfangen eines Multimediainhalts von dem Ursprungsknoten (16), zum Wandeln des empfangenen Multimediainhalts zu Dateien mit einem Multimediainhalt einer vorbestimmten Größe und zum Senden eines Befehls zu der Speicher-API (13) für das Schreiben der Dateien in Abhängigkeit von der bestimmten Größe entweder in das erste Dateisystem (11) oder in das zweite Dateisystem (12),
- wobei, wenn die bestimmte Größe der Datei gleich oder größer als ein vorbestimmter Größenschwellwert ist, das Eintrittsmodul (14) den Befehl an die einzelne Speicher-API (13) für das Schreiben der Datei in das zweite Dateisystem (12) sendet,
- wobei, wenn die bestimmte Größe der Datei kleiner als ein vorbestimmter Größenschwellwert ist, das Eintrittsmodul (14) den Befehl an die einzelne Speicher-API (13) für das Schreiben der Datei in das erste Dateisystem (11) sendet,
- ein Austrittsmodul (15) zum Empfangen eines Befehls für das Lesen, durch die einzelne Speicher-API (13), wenigstens einer der angefragten Dateien, zum Suchen der wenigstens einen angefragten Datei in den Verzeichnissen des ersten Dateisystems (11), zum Abrufen der Metadaten der angefragten Datei, die angeben, ob die angefragte Datei in dem zweiten Dateisystem (12) geschrieben ist oder nicht, und zum Erhalten des Multimediainhalts der angefragten Datei in Abhängigkeit von den abgerufenen Metadaten von entweder dem ersten Dateisystem (11) oder dem zweiten Dateisystem (12).

3. Computerprogrammprodukt, das computerausführbare Befehle umfasst, die bei einer Ausführung des Programms durch einen Computer veranlassen, dass der Computer das Verfahren von Anspruch 1 durchführt.

4. Digitales Speichermedium, auf dem ein maschinenausführbares Programm mit Befehlen codiert ist, die bei einer Ausführung durch einen Computer veranlassen, dass der Computer das Verfahren von Anspruch 1 durchführt.

## Revendications

1. Procédé de stockage d'un contenu multimédia à distribuer dans une diffusion en continu adaptative HTTP, comprenant :
- écrire des fichiers de contenu multimédia à stocker et lire au moins un fichier demandé de contenu multimédia à distribuer par l'intermédiaire d'une interface de programmation d'application, API, de stockage unique (13) vers une couche d'application de distribution de diffusion en continu adaptative qui est au-dessus de l'API de stockage unique (13),
le procédé comprenant en outre :
- recevoir un contenu multimédia et convertir le contenu multimédia reçu en les fichiers de contenu multimédia, chaque fichier ayant une taille déterminée,
- envoyer une instruction à l'API de stockage unique (13) pour écrire les fichiers dans un système de fichier sélectionné parmi deux systèmes de fichier (11, 12), un premier système de fichier (11) mis en œuvre dans des disques à circuits intégrés et un second système de fichier (12) mis en œuvre dans des disques tournants, l'API de stockage unique (13) étant en communication avec les deux systèmes de fichier (11, 12), la couche d'application de distribution de diffusion en continu adaptative ignorant à la fois le premier système de fichier (11) et le second système de fichier (12) et ledit système de fichier étant sélectionné sur la base de la taille déterminée de chaque fichier par :
- comparaison de la taille déterminée de chaque fichier à écrire à un seuil de taille préconfiguré,
- si la taille déterminée du fichier est égale ou supérieure au seuil de taille préconfiguré, envoyer l'instruction à l'API de stockage unique (13) pour écrire le fichier, l'instruction indiquant le second système de fichier (12) ; et écrire, par l'API de stockage unique (13), le fichier dans les disques tournants ;
- autrement, l'instruction envoyée à l'API de stockage unique (13) pour écrire le fichier indique le premier système de fichier (11) et le fichier est écrit par l'API de stockage unique (13) dans les disques à circuits intégrés ;
- recevoir une instruction pour lire, par l'API de stockage unique (13), l'au moins un fichier demandé :
- rechercher le fichier demandé dans un répertoire du premier système de fichier (11) pour extraire des métadonnées du fichier demandé qui indiquent si le fichier demandé est ou non écrit dans le second système de fichier (12),
- lire le contenu multimédia du fichier demandé, en fonction des métadonnées extraites, à partir soit du premier système de fichier (11), soit du second système de fichier (12).

2. Serveur de diffusion en continu adaptative HTTP (10) pour stocker un contenu multimédia à partir d'un nœud d'origine (16) et distribuer un contenu multimédia dans une diffusion en continu adaptative HTTP à un dispositif d'utilisateur final (17) demandant des fichiers de contenu multimédia, le serveur de diffusion en continu (10) comprenant :
- une API de stockage unique (13) pour écrire des fichiers de contenu multimédia à stocker et lire les fichiers demandés de contenu multimédia à distribuer, le serveur de diffusion en continu adaptative HTTP comprenant en outre :
- une premier système de fichier (11) mis en œuvre dans des disques à circuits intégrés et un second système de fichier (12) qui sont en communication avec l'API de stockage unique (13) ; une couche d'application de distribution de diffusion en continu adaptative étant au-dessus de l'API de stockage unique (13) et ignorant à la fois le premier système de fichier (11) et le second système de fichier (12), et le premier système de fichier (11) comprenant des répertoires qui indiquent une liste de fichiers disponibles dans les disques à circuits intégrés ; les répertoires comprenant des métadonnées de fichiers qui indiquent si un fichier demandé est ou non écrit dans le second système de fichier (12) ;
- un module d'entrée (14) pour recevoir un contenu multimédia à partir du nœud d'origine (16), convertir le contenu multimédia reçu en fichiers de contenu multimédia d'une taille déterminée et envoyer une instruction à l'API de stockage unique (13) pour écrire les fichiers, en fonction de la taille déterminée, soit dans le premier système de fichier (11), soit dans le second système de fichier (12) ;
- si la taille déterminée du fichier est égale ou supérieure à un seuil de taille préconfiguré, le module d'entrée (14) envoie l'instruction à l'API de stockage unique (13) pour écrire le fichier dans le second système de fichier (12) ;
- si la taille déterminée du fichier est inférieure à un seuil de taille préconfiguré, le module d'entrée (14) envoie l'instruction à l'API de stockage unique (13) pour écrire le fichier dans le premier système de fichier (11) ;
- un module de sortie (15) pour recevoir une instruction pour lire, par l'API de stockage unique (13), au moins l'un des fichiers demandés, rechercher l'au moins un fichier demandé dans les répertoires du premier système de fichier (11), extraire les métadonnées du fichier demandé qui indiquent si le fichier demandé est ou non écrit dans le second système de fichier (12) et obtenir le contenu multimédia du fichier demandé, en fonction des métadonnées extraites, à partir soit du premier système de fichier (11), soit du second système de fichier (12).

3. Produit programme d'ordinateur comprenant des instructions exécutables par ordinateur qui, lorsque le programme est exécuté par un ordinateur, amènent l'ordinateur à réaliser le procédé selon la revendication 1.

4. Support de stockage de données numériques codant un programme exécutable par machine d'instructions qui, lorsqu'elles sont exécutées par un ordinateur, amènent l'ordinateur à réaliser le procédé selon la revendication 1.
